# EUROPÄISCHE PATENTSCHRIFT

(11) **EP 2 901 046 B1**
(45) Veröffentlichungstag und Bekanntmachung des Hinweises auf die Patenterteilung: **01.02.2017**
(21) Anmeldenummer: 13747975.4
(22) Anmeldetag: 05.08.2013
(51) Int. Cl.: F16J 15/00, F16J 15/18, F16J 15/32, F16J 15/447, F16H 57/029, F16H 57/031

(54) **DICHTUNGSANORDNUNG FÜR DIE ABDICHTUNG EINER WELLE UND GETRIEBE**
SEAL ARRANGEMENT FOR THE SEALING OF A SHAFT AND TRANSMISSION
SYSTÈME D'ÉTANCHÉITÉ POUR ÉTANCHÉIFIER UN ARBRE ET UN MÉCANISME À ENGRENAGE

(30) Priorität: 25.09.2012 DE 102012018821; 02.11.2012 DE 102012021355
(43) Veröffentlichungstag der Anmeldung: 05.08.2015
(73) Patentinhaber: Sew-Eurodrive GmbH & Co. KG, 76646 Bruchsal (DE)
(72) Erfinder: REINEBERG, Martin, 76448 Dummersheim (DE)
(86) Internationale Anmeldenummer: PCT/EP2013/002334
(87) Internationale Veröffentlichungsnummer: WO 2014/048519

(56) Entgegenhaltungen:
- EP-A1- 0 062 109
- EP-A1- 2 236 868
- DE-A1- 2 706 264
- DE-T5-112004 000 627

## Beschreibung

Die Erfindung betrifft eine Dichtungsanordnung für die Abdichtung einer Welle und ein Getriebe.

Aus der EP 0 062 109 A1 ist eine Dichtungsanordnung bekannt, bei der eine Hohlwelle gegen ein Gehäuseteil mittels zwei Wellendichtringen abgedichtet wird.

Aus der DE 27 06 264 A1 ist eine Vorrichtung zum abfördern von schüttfähigem Gut bekannt.

Aus der gattungsgemässen DE 11 2004 000627 T5 ist eine kontaktlose Öldichtungsvorrichtung für eine Drehwelle bekannt.

Aus der EP 2 236 868 A1 ist eine Lamellendichtung für eine Strömungsmaschine bekannt.

Aus der EP 0 062 109 A1 ist eine lösbare Verbindung zur Übertragung hoher Drehmomente bekannt.

Der Erfindung liegt daher die Aufgabe zugrunde, eine Getriebe weiterzubilden, wobei durch das Getriebe Druckluft zu leiten ist.

Erfindungsgemäß wird die Aufgabe bei der Dichtungsanordnung nach den in Anspruch 1 und bei dem Getriebe nach den in Anspruch 14 oder 15 angegebenen Merkmalen gelöst.

Wichtige Merkmale der Erfindung bei der Dichtungsanordnung für die Abdichtung einer Welle sind, dass die Welle mittels eines Lagers in einem Gehäuseteil gelagert ist, wobei das Gehäuseteil mit einem Lagerdeckel dicht verbunden ist, insbesondere schraubverbunden ist,
wobei am Lagerdeckel ein Einlassbereich für Druckluft ausgebildet ist oder der Lagerdeckel mit einem Flanschteil verbunden ist, das einen Einlassbereich für Druckluft aufweist,
wobei die Welle eine Hohlwelle ist, deren Hohlraum in den Einlassbereich mündet,
wobei zwischen Hohlwelle und Lagerdeckel beziehungsweise zwischen Hohlwelle und einem mit dem Lagerdeckel verbundenen Teil ein Dichtspalt angeordnet ist, der in das Getriebeinnere mündet,
wobei der Dichtspalt abgedichtet wird mittels einer Abdichtungen, insbesondere mittels einer Kaskade von Abdichtungen.

Von Vorteil ist dabei, dass im Dichtspalt die Druckdifferenz vom Druckluftberiech bis zum Getriebeinneren hin über mehrere Dichtungen aufgeteilt wird, wobei diese Dichtungen verschiedene Wirkprinzipien aufweisen und somit auch verschiedene Druckdifferenzen aufnehmen.

Die Erfindung bezieht sich also auf eine Dichtungsanordnung die die Merkmale des Anspruchs 1 aufweist.

Von Vorteil ist dabei, dass Druckluft durch eine Hohlwelle durchleitbar ist, also quasi durch das Getriebe durchgehend, da der Hohlraum der Hohlwelle axial durch die Hohlwelle durchgehend ausgebildet ist. Mittels der Dichtungskaskade ist eine Abdichtung dieses Druckluftbereichs gegen den ölbefüllten Innenraum des Getriebes ermöglicht. Der Druckluftanschluss wird durch das auf den Lagerdeckel aufgesetzte Flanschteil ermöglicht, welches mit dem Lagerdeckel verbunden und somit nicht mit der Welle mitdrehend angeordnet ist.

Der Lagerdeckel ist mit dem Gehäuseteil ebenfalls dicht verbunden, in welchem ein Lager der Welle aufgenommen ist. Für die dichte Verbindung zwischen Flanschteil und Lagerdeckel werden statische Dichtungen, wie O-Ring oder dergleichen, eingesetzt. Alternativ ist Flanschteil und Lagerdeckel einstückig, also einteilig, ausführbar als Lagerdeckel, so dass dieser so gebildete Lagerdeckel den Druckluftanschluss aufweist.

Die am Druckluftanschluss einströmende Druckluft weist einen höhere Druck auf als die Luft oder das Öl des Getriebeinnenraumbereichs.

Zur Abdichtung gegen diesen relativen Überdruck ist zum drehenden Teil hin die Dichtungskaskade vorgesehen.

Bei einer vorteilhaften Ausgestaltung ist eine erste der Abdichtungen eine Wellenabdichtung mit Ringteilen,
eine zweite der Abdichtungen eine Labyrinthdichtung ist,
eine dritte der Abdichtungen eine Lamellenabdichtung ist,
eine vierte der Abdichtungen aus einer oder mehreren Radialwellendichtungen gebildet ist.

Bei einer vorteilhaften Ausgestaltung ist die erste Abdichtung aus Ringteilen angeordnet, die axial gegen einen Wellenabsatz der Welle gedrückt sind, insbesondere von einem Anpressring, der von einem oder mehreren an der Welle sich abstützenden Federelementen gegen eines oder mehrere der Ringteile gedrückt wird,
insbesondere wobei als Federelement ein Tellerfederpaket vorgesehen ist. Von Vorteil ist dabei, dass die Ringteile sich in radialer Richtung erstrecken wollen und somit dicht anliegen am stationären Teil.

Bei einer vorteilhaften Ausgestaltung weisen die Ringteile jeweils einen quadratischen oder rechteckförmigen Ringquerschnitt auf. Von Vorteil ist dabei, dass ein flächiges Anliegen erreichbar ist und daher eine große Druckdifferenz aufnehmbar ist.

Bei einer vorteilhaften Ausgestaltung ist das jeweilige Ringteil aus einem Gewebe gefertigt, insbesondere aus einem aus PTFE-Garn, insbesondere Graphit-haltigem PTFE-Garn, gefertigten Gewebe. Von Vorteil ist dabei, dass eine geringe Reibung auftritt und hohe Temperaturstabilität vorhanden ist.

Bei einer vorteilhaften Ausgestaltung ist die Labyrinthdichtung zwischen einer Labyrinthscheibe und dem Lagerdeckel oder einem mit dem Lagerdeckel verbundenen Teil, insbesondere Deckelteil oder Flanschteil, angeordnet,
wobei die Labyrinthscheibe dicht verbunden ist mit der Welle, insbesondere auf die Welle aufgeschrumpft ist, insbesondere also vor dem Verbinden mit der Welle eine von der Welle unterschiedliche Temperatur aufweist, insbesondere mit einer Temperaturdifferenz von mindestens 40 Kelvin. Von Vorteil ist dabei, dass eine fetthaltige Labyrinthdichtung eine hohe Druckdifferenz aufnimmt.

Bei einer vorteilhaften Ausgestaltung weist die Lamellendichtung
- erste Lochscheiben auf, die an die Welle angedrückt sind, insbesondere also nach radial innen zur Welle hin dicht an der Welle anliegen,
- und zweite Lochscheiben auf, die an den Lagerdeckel oder ein mit dem Lagerdeckel verbundenes Teil angedrückt sind, insbesondere also nach radial außen zum Lagerdeckel oder zu einem mit dem Lagerdeckel verbundenen Teil hin dicht anliegen,
insbesondere wobei erste und zweite Lochscheiben in axialer Richtung abwechselnd hintereinander angeordnet sind, insbesondere jeweils die in axialer Richtung nächstbenachbarte Lochscheibe berührend,
insbesondere wobei jede der Lochscheiben einen Radialschlitz aufweist, insbesondere also einen radial verlaufenden Schlitz,
insbesondere wobei die Schlitze der Lochscheiben in Umfangsrichtung voneinander beabstandet sind, insbesondere regelmäßig. Von Vorteil ist dabei, dass mittels der Schlitze die Lochscheiben aufschiebbar sind auf die Welle und in der vorgesehenen, die Lamellendichtung aufnehmenden Nut einschnappen, wobei die erste Sorte sich innen und die zweite Sorte sich außen, also am Lagerdeckel oder einem mit ihm verbundenen Teil, anlegt.

Bei einer vorteilhaften Ausgestaltung ist in der Lamellendichtung und in der Labyrinthdichtung Fett vorgesehen,
insbesondere also im Dichtspalt zwischen der ersten Abdichtung und der zum Dichtspalt hin angeordneten Radialwellendichtung Fett vorgesehen ist. Von Vorteil ist dabei, dass eine gute Abdichtung erzielbar ist.

Bei einer vorteilhaften Ausgestaltung weist der axial weiter außen angeordnete Radialwellendichtring ein Federelement zum Andrücken einer Dichtlippe gegen die Welle auf, wobei das Federelement zum Dichtspalt hin angeordnet ist, insbesondere so dass Überdruck die Dichtlippe gegen die Welle drückt, also die Federkraft verstärkt,
insbesondere wobei der Überdruck gegen den im Getriebeinneren bestehenden Druck auftritt, also den Druck im Getriebeinneren übertrifft. Von Vorteil ist dabei, dass eine gute Schmierung vorliegt und bei Überdruck ein Öffnen des Wellendichtrings verhinderbar ist.

Bei einer vorteilhaften Ausgestaltung ist die Dichtlippe des axial weiter außen angeordneten Radialwellendichtrings fettgeschmiert. Von Vorteil ist dabei, dass eine hohe Standzeit erreichbar ist.

Bei einer vorteilhaften Ausgestaltung ist die Dichtlippe des axial weiter innen angeordneten Radialwellendichtrings ölgeschmiert. Von Vorteil ist dabei, dass eine gute Kühlung und hohe Standzeit des Wellendichtrings erreichbar ist. Außerdem ist Ölbereich und Fettbereich sicher getrennt.

Bei einer vorteilhaften Ausgestaltung sind der der axial weiter innen und der axial weiter außen liegende Radialwellendichtring axial nebeneinander angeordnet, insbesondere einander berührend. Von Vorteil ist dabei, dass eine kompakte Anordnung erreichbar ist.

Bei einer vorteilhaften Ausgestaltung sind die mit dem Lagerdeckel direkt oder indirekt schraubverbundenen Teile mittels einer Ringdichtung abgedichtet verbunden. Von Vorteil ist dabei, dass die Gehäuseteile dicht verbunden sind und somit ein einteiliges Gehäuseteil durch ein komplex aufgebautes mehrteiliges System ersetzbar ist.

Wichtige Merkmale bei dem Getriebe sind, dass es mit einer solchen Dichtungsanordnung ausgeführt ist. Von Vorteil ist dabei, dass Druckluft durch das Getriebe durchleitbar ist.

Bei einer vorteilhaften Ausgestaltung ist an jedem Lager einer Abtriebswelle des Getriebes jeweils eine die Dichtungsanordnung angeordnet. Von Vorteil ist dabei, dass Druckluft durchleitbar ist durch das Getriebe, wobei der Einlass am ersten Lager einem Auslass am anderen entspricht.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:

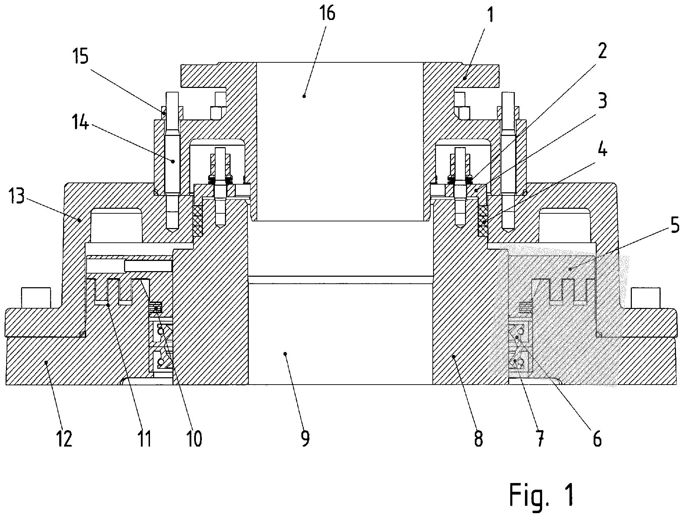

In der Figur 1 ist ein Querschnitt durch einen Teil eines erfindungsgemäßen Getriebes dargestellt.

Das Getriebe weist eine eintreibende und eine abtreibende Welle sowie Getriebestufen auf.

Die abtreibende Welle 8 ist beidseitig herausgeführt, wobei sie in zwei gegenüberliegenden Gehäusewänden des Getriebegehäuses mittels eines jeweiligen Lagers gelagert ist.

Die Figur 1 ist ein vergrößerter Ausschnitt, der den Bereich um einen eines der Lager abdeckenden Lagerdeckel 12 zeigt.

Das Deckelteil 13 ist mit dem Lagerdeckel 12 schraubverbunden, wobei eine Dichtung zwischengeordnet ist. Das Deckelteil 13 ist dabei axial, also in Abtriebswellenachsrichtung, aufgeschoben auf den Lagerdeckel 12.

Mit dem Deckelteil 13 ist wiederum auf dessen vom Lagerdeckel 12 axial abgewandter Seite ein Flanschteil 1 schraubverbunden mittels einer Stiftschraube 14, die in eine Gewindebohrung des Deckelteils 13 eingeschraubt ist und mit einer Mutter 15, welche auf das Flanschteil 1 drückt, befestigt ist.

Das Flanschteil 1 weist eine zur Abtriebswelle 8 mittig angeordnete Bohrung 16 auf, die als einlass für Druckluft dient. Diese Druckluft strömt durch die Bohrung 16 und den Hohlraum 9 der Abtriebswelle 8 axial hindurch und auf der anderen Seite des Getriebes somit weiter.

Auf diese Weise ist also Druckluft durch das Getriebe und auch seine Abtriebswelle 8 hindurchleitbar.

Die Anordnung nach Figur 1 ist auch axial beidseitig am Getriebe, also bei beiden Lagern der Abtriebswelle 8, anordenbar.

Das Flanschteil 1 weist an seiner Innenseite einen Kragen auf, mit dem es in den Hohlraum 9 der hohl ausgeführten Abtriebswelle 8 hineinragt.

Zur Abdichtung des Getriebeinneren gegen die Druckluft ist eine Kaskade von Dichtsystemen vorgesehen. Dabei durchläuft der Dichtspalt zwischen drehendem und stationärem Getriebeteil zuerst durch eine Wellenabdichtung mit Anpressringen 4, danach durch eine Labyrinthdichtung 11 und danach durch eine Lamellendichtung 10 gefolgt von Radialwellendichtringen (6, 7)

Hierzu sind zunächst eine Wellenabdichtung mit Anpressringen vorgesehen. Dabei werden zwischen der Abtriebswelle 8 und dem Deckelteil 13 Ringteile 4 axial hintereinander angeordnet, wobei die in axialer Richtung gesehen nächstbenachbarten Ringteile 13 sich jeweils berühren.

Jedes Ringteil 4 ist aus einem Gewebe gefertigt, das aus einem Graphit-inkorporiertem PTFE-Garn gefertigt ist. Mittels des Graphit ist die Reibung verringerbar. Jedes Ringteil 4 weist einen radial verlaufenden Schlitz auf, wobei die Schlitze zweier nächstbenachbarten Ringteile 4 jeweils in Umfangsrichtung um 120° voneinander beabstandet sind.

Zur Herstellung der Dichtheit wird ein Ring ein Anpressring 3, welcher von sich an der Abtriebswelle 8 abstützenden Federelementen 2 gedrückt wird auf eines der Ringteile 4.

Dabei sind die Federelemente 2 als Federpaket aus Tellerfedern realisiert.

Der Anpressring 3 ist somit drehfest mit der Abtriebswelle 8 verbunden und drückt in axialer Richtung das Paket aus Ringteilen 4 gegen einen Wellenabsatz der Abtriebswelle 8.

Jedes Ringteil 4 weist einen im Wesentlichen quadratischen oder rechteckförmigen Ringquerschnitt auf.

Hierbei werden die Ringteile verformt und stellen somit eine dichte Verbindung zwischen Abtriebswelle 8 und Deckelteil 13 her.

Zur weiteren Abdichtung gegen die Druckluft ist eine Labyrinthscheibe 5 auf die Abtriebswelle 8 aufgeschrumpft und somit dicht und drehfest mit der Abtriebswelle 8 verbunden.

Das zugehörige Labyrinth der Labyrinthdichtung ist zwischen Labyrinthscheibe 5 und Lagerdeckel 12 angeordnet. Hierbei weist die Labyrinthscheibe 5 Ringnuten auf, die zu Ringnuten des Lagerdeckels 12 radial versetzt angeordnet sind, so dass die zwischen den Ringnuten der Labyrinthscheibe 5 angeordneten Erhebungen in entsprechende Ringnuten des Lagerdeckels 12 hineinragen. Auf diese Weise ist ein Dichtungsspalt zwischen der drehfest mit der Abtriebswelle 8 verbundenen Labyrinthscheibe 5 und dem Lagerdeckel 12 erzeugt, der eine Druckminderung bewirkt.

Der dichtungsspalt verläuft weiter durch eine Lamellendichtung 10. Diese besteht aus Lochscheiben, welche alle einen radial verlaufenden Schlitz aufweisen, wobei diese Schlitze in Umfangsrichtung voneinander beabstandet sind, insbesondere regelmäßig.

Dabei ist sind einige, insbesondere zwei oder mehr, der Lochscheiben nach radial innen abdichtend, indem sie sich an den Nutgrund einer umlaufenden Ringnut der Abtriebswelle 8 anlegen. Die zu einer jeden dieser Lochscheiben in axialer Richtung nächstbenachbarte Lochscheibe legt sich an den Lagerdeckel 12 an, weil der Außendurchmesser entsprechend groß dimensioniert ist. Somit entsteht eine Lamellendichtung, deren erster Teil an Lochscheiben nach radial innen zum drehenden Teil, also Welle 8, und deren zweiter Teil an Lochscheiben nach radial außen zum Lagerdeckel 12 dicht anliegt.

Auch diese Lamellendichtung 10 nimmt eine Druckdifferenz auf.

Vorzugsweise liegen drei Lochscheiben außen und zwei innen an.

Schlussendlich sind zwischen Lagerdeckel 12 und Welle 8 zwei axial nebeneinander angeordnete Radialwellendichtringe (6, 7) angeordnet, wobei sie in axialer Richtung spiegelverkehrt angeordnet sind.

Der weiter außen angeordnete Radialwellendichtring 6 weist eine Dichtlippe auf, die fettgeschmiert arbeitet, da in der Lamellendichtung 10 und in der Labyrinthdichtung 11 Fett vorgesehen ist. Dabei ist die als Federelement vorgesehene Ringfeder des Radialwellendichtrings 6 vom Fettbereich her zugänglich, also von axial weiter außen.

Die als Federelement vorgesehen Ringfeder des anderen Radialwellendichtrings 7 drückt dessen Dichtlippe gegen die Welle 8 und ist vom Getriebeinnenraum her zugänglich und somit Öl-geschmiert, so dass die Dichtlippe des Radialwellendichtrings 7 ölgeschmiert arbeitet.

Die physikalischen Prinzipien der verschiedenen Dichtungen der Kaskade sind derart gewählt, dass diejenigen Dichtungen, welche einer höheren Druckdifferenz standhalten, im Dichtungsspalt näher zum Druckluftbereich und weiter weg vom Getriebeinneren angeordnet sind.

Unter Druck ist hierbei auch Luftdruck zu verstehen.

### Bezugszeichenliste

- 1: Flanschteil für Luftanschluss
- 2: Federelemente, insbesondere Federpaket aus Tellerfedern
- 3: Anpressring
- 4: Ringteil, insbesondere aus Dichtband
- 5: Labyrinthscheibe
- 6: äußere Radialwellendichtung mit Federelement
- 7: innere Radialwellendichtung mit Federelement
- 8: Welle, insbesondere hohle Abtriebswelle
- 9: Bohrung oder Hohlraum
- 10: Lammellendichtung
- 11: Labyrinthdichtung
- 12: Lagerdeckel
- 13: Deckelteil
- 14: Stiftschraube
- 15: Mutter
- 16: Bohrung als Einlass für Luft

## Patentansprüche

1. Dichtungsanordnung für die Abdichtung eines zumindest teilweise mit Öl befüllten Getriebeinnenraumbereichs gegen einen mit Druckluft beaufschlagten Raumbereich,
wobei die Dichtungsanordnung eine Welle (8) eines Getriebes aufweist,
wobei die Welle (8) mittels eines Lagers in einem Gehäuseteil gelagert ist,
wobei das Gehäuseteil mit einem Lagerdeckel (12) dicht verbunden ist,
wobei als mit Druckluft beaufschlagter Raumbereich ein Einlassbereich für Druckluft vorgesehen ist oder die Dichtungsanordnung einen Einlassbereich für Druckluft als mitDruckluft beaufschlagter Raumbereich umfasst,
wobei die Welle (8) eine Hohlwelle ist, deren Hohlraum in den Einlassbereich mündet,
wobei
- entweder am Lagerdeckel (12) der Einlassbereich für Druckluft ausgebildet ist,
wobei zwischen Hohlwelle und Lagerdeckel (12) ein Dichtspalt angeordnet ist, der in das Getriebeinnere mündet,
wobei der Dichtspalt abgedichtet wird mittels Abdichtungen,
- oder der Lagerdeckel (12) mit einem Flanschteil (1) verbunden ist, das den Einlassbereich für Druckluft aufweist, wobei zwischen Hohlwelle und einem mit dem Lagerdeckel (12) verbundenen Teil ein Dichtspalt angeordnet ist, der in den Getriebeinnenraumbereich mündet, wobei der Dichtspalt abgedichtet wird mittels Abdichtungen, ,
wobei zwei oder mehr der Abdichtungen verschiedene Wirkprinzipien aufweisen,
**dadurch gekennzeichnet, dass**
die erste Abdichtung aus Ringteilen angeordnet ist, die axial gegen einen Wellenabsatz der Welle (8) gedrückt sind
und, dass
jedes Ringteil einen Radialschlitz aufweist
und, dass
die Schlitze der Ringteile in Umfangsrichtung voneinander beabstandet sind.

2. Dichtungsanordnung nach Anspruch 1,
**dadurch gekennzeichnet, dass**
eine der Abdichtungen eine berührungslos wirkende Abdichtung ist und
eine zweite der Abdichtungen eine berührend wirkende Abdichtung ist.

3. Dichtungsanordnung nach mindestens einem der vorangegangenen Ansprüche,
**dadurch gekennzeichnet, dass**
die erste der Abdichtungen eine Wellenabdichtung mit Ringteilen ist,
eine zweite der Abdichtungen eine Labyrinthdichtung (11) ist,
eine dritte der Abdichtungen eine Lamellenabdichtung (10) ist,
eine vierte der Abdichtungen aus einer oder mehreren Radialwellendichtungen (6, 7) gebildet ist.

4. Dichtungsanordnung nach mindestens einem der vorangegangenen Ansprüche,
**dadurch gekennzeichnet, dass**
als Federelement ein Tellerfederpaket vorgesehen ist.

5. Dichtungsanordnung nach mindestens einem der vorangegangenen Ansprüche,
**dadurch gekennzeichnet, dass**
die Ringteile jeweils einen quadratischen oder rechteckförmigen Ringquerschnitt aufweisen.

6. Dichtungsanordnung nach mindestens einem der vorangegangenen Ansprüche,
**dadurch gekennzeichnet, dass**
das jeweilige Ringteil aus einem Gewebe gefertigt ist.

7. Dichtungsanordnung nach mindestens einem der vorangegangenen Ansprüche,
**dadurch gekennzeichnet, dass**
die Labyrinthdichtung (11) zwischen einer Labyrinthscheibe (5) und dem Lagerdeckel (12) oder einem mit dem Lagerdeckel (12) verbundenen Teil, angeordnet ist,
wobei die Labyrinthscheibe (5) dicht verbunden ist mit der Welle (8).

8. Dichtungsanordnung nach mindestens einem der vorangegangenen Ansprüche,
**dadurch gekennzeichnet, dass**
die Lamellendichtung (10)
- erste Lochscheiben aufweist, die an die Welle (8) angedrückt sind,
- und zweite Lochscheiben aufweist, die an den Lagerdeckel (12) oder ein mit dem Lagerdeckel (12) verbundenes Teil angedrückt sind.

9. Dichtungsanordnung nach mindestens einem der vorangegangenen Ansprüche,
**dadurch gekennzeichnet, dass**
in der Lamellendichtung (10) und in der Labyrinthdichtung (11) Fett vorgesehen ist.

10. Dichtungsanordnung nach mindestens einem der vorangegangenen Ansprüche,
**dadurch gekennzeichnet, dass**
der axial weiter außen angeordnete Radialwellendichtring ein Federelement zum Andrücken einer Dichtlippe gegen die Welle (8) aufweist, wobei das Federelement zum Dichtspalt hin angeordnet ist.

11. Dichtungsanordnung nach mindestens einem der vorangegangenen Ansprüche,
**dadurch gekennzeichnet, dass**
die Dichtlippe des axial weiter außen angeordneten Radialwellendichtrings fettgeschmiert ist.

12. Dichtungsanordnung nach mindestens einem der vorangegangenen Ansprüche,
**dadurch gekennzeichnet, dass**
die Dichtlippe des axial weiter innen angeordneten Radialwellendichtrings ölgeschmiert ist,
oder dass
der der axial weiter innen und der axial weiter außen liegende Radialwellendichtring axial nebeneinander angeordnet sind.

13. Dichtungsanordnung nach mindestens einem der vorangegangenen Ansprüche,
**dadurch gekennzeichnet, dass**
die mit dem Lagerdeckel (12) direkt oder indirekt schraubverbundenen Teile mittels einer Ringdichtung abgedichtet verbunden sind.

14. Getriebe mit einer Dichtungsanordnung nach mindestens einem der vorangegangenen Ansprüche.

15. Getriebe nach Anspruch 14,
**dadurch gekennzeichnet, dass**
an jedem Lager einer Abtriebswelle des Getriebes jeweils eine Dichtungsanordnung nach einem der Ansprüche 1 bis 13 angeordnet ist.

## Claims

1. A seal arrangement for sealing off an at least partially oil-filled transmission inner space region from a spatial region which is acted upon by compressed air,
wherein the seal arrangement has a shaft (8) of a transmission,
wherein the shaft (8) is mounted by means of a bearing in a housing part,
wherein the housing part is tightly connected to a bearing cover (12),
wherein an inlet region for compressed air is provided as the spatial region acted upon by compressed air, or the seal arrangement comprises an inlet region for compressed air as the spatial region acted upon by compressed air,
wherein the shaft (8) is a hollow shaft, the cavity of which opens into the inlet region, wherein
- either the inlet region for compressed air is formed on the bearing cover (12),
wherein a sealing gap which opens into the interior of the transmission is arranged between the hollow shaft and the bearing cover (12),
wherein the sealing gap is sealed off by means of sealing means,
- or the bearing cover (12) is connected to a flange part (1) which has the inlet region for compressed air,
wherein a sealing gap which opens into the transmission inner space region is arranged between the hollow shaft and a part connected to the bearing cover (12),
wherein the sealing gap is sealed off by means of sealing means,
wherein two or more of the sealing means have different principles of operation,
**characterised in that** the first sealing means is arranged from ring parts which are pressed axially against a shaft shoulder of the shaft (8),
and **in that** each ring part has a radial slot,
and **in that** the slots of the ring parts are spaced apart from one another in the circumferential direction.

2. A seal arrangement according to Claim 1,
**characterised in that**
one of the sealing means is a non-contact sealing means and
a second one of the sealing means is a contact sealing means.

3. A seal arrangement according to at least one of the preceding claims,
**characterised in that**
the first one of the sealing means is a shaft sealing means with ring parts,
a second one of the sealing means is a labyrinth seal (11),
a third one of the sealing means is a lamellar sealing means (10),
a fourth one of the sealing means is formed from one or more radial shaft seals (6, 7).

4. A seal arrangement according to at least one of the preceding claims,
**characterised in that**
a plate-spring assembly is provided as spring element.

5. A seal arrangement according to at least one of the preceding claims,
**characterised in that**
the ring parts in each case have a square or rectangular ring cross-section.

6. A seal arrangement according to at least one of the preceding claims,
**characterised in that**
the respective ring part is manufactured from a woven fabric.

7. A seal arrangement according to at least one of the preceding claims,
**characterised in that**
the labyrinth seal (11) is arranged between a labyrinth disc (5) and the bearing cover (12) or a part connected to the bearing cover (12),
the labyrinth disc (5) being connected tightly to the shaft (8).

8. A seal arrangement according to at least one of the preceding claims, **characterised in that** the lamellar seal (10)
- has first perforated discs which are pressed against the shaft (8),
- and has second perforated discs which are pressed against the bearing cover (12) or a part connected to the bearing cover (12).

9. A seal arrangement according to at least one of the preceding claims,
**characterised in that**
grease is provided in the lamellar seal (10) and in the labyrinth seal (11).

10. A seal arrangement according to at least one of the preceding claims,
**characterised in that**
the radial shaft sealing ring arranged axially further to the outside has a spring element for pressing a sealing lip against the shaft (8), the spring element being arranged towards the sealing gap.

11. A seal arrangement according to at least one of the preceding claims,
**characterised in that**
the sealing lip of the radial shaft sealing ring arranged axially further to the outside is grease-lubricated.

12. A seal arrangement according to at least one of the preceding claims,
**characterised in that**
the sealing lip of the radial shaft sealing ring arranged axially further to the inside is oil-lubricated,
or **in that**
the the radial shaft sealing ring axially further to the inside and the radial shaft sealing ring axially further to the outside are arranged axially next to one another.

13. A seal arrangement according to at least one of the preceding claims,
**characterised in that**
the parts which are screw-connected directly or indirectly to the bearing cover (12) are connected in sealed-off manner by means of a ring seal.

14. A transmission with a seal arrangement according to at least one of the preceding claims.

15. A transmission according to Claim 14,
**characterised in that**
one seal arrangement according to one of Claims 1 to 13 in each case is arranged on each bearing of an output shaft of the transmission.

## Revendications

1. Système d'étanchéité pour assurer l'étanchéité d'une région d'espace intérieur de transmission au moins partiellement remplie d'huile vis-à-vis d'une région d'espace alimentée en air comprimé,
sachant que le système d'étanchéité présente un arbre (8) d'une transmission,
sachant que l'arbre (8) est monté au moyen d'un palier dans un élément formant carter, sachant que l'élément formant carter est relié de manière étanche à un chapeau de palier (12),
sachant qu'une région d'admission d'air comprimé est prévue comme région d'espace alimentée en air comprimé, ou bien le système d'étanchéité comprend une région d'admission d'air comprimé comme région d'espace alimentée en air comprimé, sachant que l'arbre (8) est un arbre creux, dont la cavité débouche dans la région d'admission,
sachant que
- soit la région d'admission d'air comprimé est configurée sur le chapeau de palier (12),
sachant qu'un interstice d'étanchéité qui débouche à l'intérieur de la transmission est disposé entre l'arbre creux et le chapeau de palier (12),
sachant que l'interstice d'étanchéité est rendu étanche au moyen d'un joint d'étanchéité,
- soit le chapeau de palier (12) est relié à un élément formant bride (1) qui présente la région d'admission d'air comprimé,
sachant qu'un interstice d'étanchéité qui débouche dans la région d'espace intérieur de transmission est disposé entre l'arbre creux et un élément relié au chapeau de palier (12),
sachant que l'interstice d'étanchéité est rendu étanche au moyen d'un joint d'étanchéité,
sachant que deux ou plusieurs des joints d'étanchéité présentent des principes d'action différents,
**caractérisé en ce que** le premier joint d'étanchéité est formé d'éléments annulaires qui sont pressés axialement contre un gradin de l'arbre (8),
et **en ce que** chaque élément annulaire présente une fente radiale,
et **en ce que** les fentes des éléments annulaires sont mutuellement distantes en direction périphérique.

2. Système d'étanchéité selon la revendication 1, **caractérisé en ce que** un des joints d'étanchéité est un joint d'étanchéité agissant sans contact,
et un deuxième des joints d'étanchéité est un joint d'étanchéité agissant par contact.

3. Système d'étanchéité selon au moins une des revendications précédentes, **caractérisé en ce que**
le premier des joints d'étanchéité est un joint d'étanchéité d'arbre avec des éléments annulaires,
un deuxième des joints d'étanchéité est un joint d'étanchéité à labyrinthe (11),
un troisième des joints d'étanchéité est un joint d'étanchéité à lamelles (10),
un quatrième des joints d'étanchéité est formé d'un ou plusieurs joints radiaux d'étanchéité d'arbre (6, 7).

4. Système d'étanchéité selon au moins une des revendications précédentes, **caractérisé en ce qu'**un groupe de rondelles-ressorts est prévu comme élément à effet de ressort.

5. Système d'étanchéité selon au moins une des revendications précédentes, **caractérisé en ce que** les éléments annulaires présentent respectivement une section annulaire carrée ou rectangulaire.

6. Système d'étanchéité selon au moins une des revendications précédentes, **caractérisé en ce que** l'élément annulaire respectif est fabriqué en un matériau tissé.

7. Système d'étanchéité selon au moins une des revendications précédentes, **caractérisé en ce que** le joint d'étanchéité à labyrinthe (11) est disposé entre un disque labyrinthe (5) et le chapeau de palier (12) ou un élément relié au chapeau de palier (12),
sachant que le disque labyrinthe (5) est relié de manière étanche à l'arbre (8).

8. Système d'étanchéité selon au moins une des revendications précédentes, **caractérisé en ce que** le joint d'étanchéité à lamelles (10)
- présente des premiers disques perforés, qui sont pressés contre l'arbre (8),
- et présente des deuxièmes disques perforés, qui sont pressés contre le chapeau de palier (12) ou un élément relié au chapeau de palier (12).

9. Système d'étanchéité selon au moins une des revendications précédentes, **caractérisé en ce que** de la graisse est prévue dans le joint d'étanchéité à lamelles (10) et dans le joint d'étanchéité à labyrinthe (11).

10. Système d'étanchéité selon au moins une des revendications précédentes, **caractérisé en ce que** la bague radiale d'étanchéité d'arbre disposée axialement plus à l'extérieur présente un élément à effet de ressort pour presser une lèvre d'étanchéité contre l'arbre (8), sachant que l'élément à effet de ressort est disposé vers l'interstice d'étanchéité.

11. Système d'étanchéité selon au moins une des revendications précédentes, **caractérisé en ce que** la lèvre d'étanchéité de la bague radiale d'étanchéité d'arbre disposée axialement plus à l'extérieur est lubrifiée par graisse.

12. Système d'étanchéité selon au moins une des revendications précédentes, **caractérisé en ce que** la lèvre d'étanchéité de la bague radiale d'étanchéité d'arbre disposée axialement plus à l'intérieur est lubrifiée par huile,
ou **en ce que** la bague radiale d'étanchéité d'arbre située axialement plus à l'intérieur et la bague radiale d'étanchéité d'arbre située axialement plus à l'extérieur sont disposées axialement l'une à côté de l'autre.

13. Système d'étanchéité selon au moins une des revendications précédentes, **caractérisé en ce que** les éléments reliés directement ou indirectement au chapeau de palier (12) par vissage sont reliés en étant étanchés au moyen d'un joint d'étanchéité annulaire.

14. Transmission avec un système d'étanchéité selon au moins une des revendications précédentes.

15. Transmission selon la revendication 14, **caractérisée en ce qu'**un système d'étanchéité respectif selon l'une des revendications 1 à 13 est disposé sur chaque palier d'un arbre de sortie de la transmission.
